# EUROPEAN PATENT APPLICATION

(11) **EP 0 587 942 A1**
(43) Date of publication of application: **23.03.1994**
(21) Application number: 92118560.9
(22) Date of filing: 29.10.1992
(51) Int. Cl.: C08G 18/38, C08G 18/10, C08G 18/80, C09J 175/04

(54) **Heat-resistant and flame-retardant or flameproof PUR hot melt adhesive**

(30) Priority: 18.09.1992 DE 9212616 U
(71) Applicant: H.B. FULLER LICENSING & FINANCING, INC., Wilmington, Delaware 19801 (US)
(72) Inventor: Maitz, Franz, W-8206 Bruckmühl (DE)
(74) Representative: Strasse, Vonnemann & Partner

(57) **Abstract**

The invention relates to a heat-resistant and flameproof, moisture-reactive PUR hot melt adhesive having a polyester or a polyether as its polyhydroxy component. The polyhydroxy component is segmented by a brominated bisphenol-A-diol. Furthermore, the brominated bisphenol-A-diol can be contained in the PUR hot melt adhesive distributed in block-like form or statistically.

The invention further relates to a heat protection laminate consisting of at least two material layers and an adhesive mixture bonding the two layers together which laminate is used for producing labour safety materials which are highly heat resistant and flexible. The adhesive mixture of this laminate contains the following components:
a) a heat resistant, moisture-reactive PUR hot melt adhesive containing a halogenated diol compound,
b) a phosphoric acid ester,
c) a multifunctional isocyanate compound.

The interaction of the heat-resistant, moisture-reactive PUR hot melt adhesive containing brominated bisphenol-A-diol as its diol component, the phosphoric acid ester and the multi-functional isocyanate in the adhesive mixture produces heat resistance and high flexibility, in particular in a heat protection laminate.

The adhesive mixture according to the invention can be applied directly onto foils. Subsequently, tissue is applied onto the foil pretreated in this manner. The adhesive mixture cures under the influence of moisture.

## Description

The invention relates to a flame-retardant or flameproof and heat-resistant moisture-reactive polyurethane (PUR) hot melt adhesive.

The invention further relates to a heat protection laminate for producing labour safety materials which are highly heat resistant and flexible, said laminate consisting of at least two material layers which are bonded together by means of an adhesive mixture which contains such a flame-retardant or flameproof and heat-resistant PUR hot melt adhesive.

Known heat protection laminates, e.g. made of aluminium foil or metal vapour-coated polyester foil and glass wool woven or non-woven and/or specific cotton tissue, are bonded together by means of adhesives on a solvent and/or water basis. Such adhesives can be made to be heat-resistant, yet exhibit shortcomings in processing.

The conventional flame protection agents which can be used in specific PUR systems such as PUR hard foams, in general cannot be used for hot melt adhesives.

For example, many known flame protection agents contain water or release water upon activation; this can lead to undesirable or even harmful reactions with the moisture-reactive hot melt adhesive.

Furthermore, known flame protection agents contain compounds which catalyze detrimental reactions, in particular trimerisations, of the NCO groups, or release such compounds during their application.

A particularly disadvantageous feature of the use of halogenated compounds, i.e. typical flame protection agents, is that they release halogen and acidic halogen-containing compounds when exposed to heat, which by-products would have a destructive effect on reactive PUR hot melt adhesives (whereas this is tolerable with PUR hard foams).

It has therefore always been assumed up to now that flame protection agents which may be used for PUR hard foams, cannot be used for PUR hot melt adhesives.

It is an essential object of the invention to provide a heat-resistant, flame-retardant, flameproof or non-flammable and moisture-reactive PUR hot melt adhesive, capable of overcoming the aforementioned shortcomings of the prior art.

It is a further object of the invention to provide an improved heat protection laminate for producing labour safety materials, protective clothes and the like which is highly heat-resistant and flexible.

This object is achieved by the features of the independent claims; advantageous embodiments are defined in the subclaims.

The heat-resistant, flame-retardant or flameproof and moisture-reactive hot melt adhesive according to the invention is a reactive polyurethane (PUR) hot melt adhesive which contains at least one reaction product of at least one component containing NCO-groups and at least one polyhydroxy component (said polyhydroxy component preferably being a polyester compound, a polyester polyether compound, a polyether compound or the like), which comprises a flameproofing or non-flammable component; the ratios of the NCO and hydroxyl components are preferably chosen such that there is an excess of NCO.

Preferably, polyesters are used as the polymer basis since they produce a higher heat resistance of the moisture-reactive PUR hot melt adhesive. The polyhydroxy component is then preferably randomly segmented by a halogenated diol component. This segmenting halogenated diol component should be sufficiently thermally stable to ensure sufficient heat resistance and resistance to flaming and combustion, of the moisture-reactive PUR hot melt adhesive. Surprisingly, in particular halogenated bisphenol-A-diols, preferably their brominated form, have proved suitable for this purpose. At processing temperatures of up to 200°C, none of the above-mentioned expected problems occurred. A suitable brominated bisphenol-A-diol is commercially available under the trade name Fire Guard FG 3600 (TM).

Alternatively, a prepolymer, produced by reacting an NCO reactive component with a polyhydroxy compound, can be used as the polymer basis. In this case, diphenyl methane-4,4-diisocyanate (MDI) is preferably reacted with a polyether or a polyester. Subsequently, the halogenated diol component, preferably brominated bisphenol-A-diol is added. This sequence of reactions is particularly advantageous since due to the addition at a later stage of the halogenated bisphenol-A-diol, the distribution of the diol component in the moisture-reactive PUR hot melt adhesive is block-like or statistical. As a further alternative, a prepolymer can be produced from a halogenated diol compound and an isocyanate compound which is subsequently reacted with a polyhydroxy component (which can be a corresponding second prepolymer). This sequence of reactions likewise results in a block-like or statistical distribution of the diol component in the hot melt adhesive.

In a preferred embodiment of the invention the heat-resistant, moisture-reactive PUR hot melt adhesives are used as ingredients of a heat protection laminate which is excellently suitable for the production of highly heat-resistant and flexible labour safety materials. In order to further increase the flexibility of the heat protection laminate, a phosphoric acid ester is added to the mixture. In the presence of the invention's halogenated compounds, the phosphoric acid ester surprisingly exhibits synergistic flame protection properties. Diphenyl kresyl phosphate is preferably used as the phosphoric acid ester; however, triphenyl kresyl phosphates for example are also suited.

In order to further increase the heat resistance of the adhesive mixture and thus of the heat protection laminate, a multifunctional, preferably trifunctional, isocyanate is added to the mixture. This isocyanate is particularly added only after the functionalization of the reactive OH groups of the PUR hot melt adhesive with diisocyanate compounds, in particular with MDI (diphenyl methane-4,4-diisocyanate). Isocyanates containing more than three reactive NCO groups are also suitable for further increasing the heat resistance of the adhesive mixture through increased cross-linking. The use of aliphatic compounds, e.g. Desmodur DA (TM), is preferred.

The adhesive mixture of the heat protection laminate according to the invention preferably contains the following components:
a) a heat-resistant, moisture-reactive PUR hot melt adhesive containing a halogenated diol compound,
b) a phosphoric acid ester,
c) a trifunctional isocyanate compound.

A particularly preferred adhesive mixture for the heat protection laminate according to the invention at least contains the following ingredients (in weight percents, based on the total weight):
a) 65 to 90 wt.-% of heat resistant, moisture-reactive PUR hot melt adhesive, containing 5 to 15 wt.-% of brominated bisphenol-A-diol,
b) 5 to 15 wt.-% of phosphoric acid ester,
c) 0.5 to 5 wt.-% of trifunctional isocyanate.

Alternatively a moisture-reactive PUR hot melt adhesive containing a polyester as its polyhydroxy component can be mixed with an increased MDI content (15 wt.-% instead of 10 to 12 wt.-%); the trifunctional isocyanate can then be eliminated.

Adding a further amount of trifunctional isocyanate compound is also useful in this variant, if an even increased heat resistance of the adhesive mixture is to be obtained. Given this increased MDI content, the moisture-reactive PUR hot melt adhesive contains about 5 wt.-% of brominated bisphenol-A-diol and - as a further component - about 5 wt.-% of phosphoric acid ester.

The hot melt adhesive according to the invention can be used together with aluminium foils or metal vapour-coated polyester foils as well as glass wool (woven or non-woven) or flame-proofed cotton tissue, to give protective materials, for example for the production of protective clothes.

According to this invention, the materials described will generally be flame-retardant, i.e. not incombustible or heat-resistant under all possible conditions. They will nevertheless prove non-flammable and heat-resistant under typical application conditions at increased temperatures.

The two following embodiment examples, which comprise a best mode, are provided to elucidate the invention but are not intended to restrict same in any way:

### Embodiment example 1:

An adhesive according to the invention is produced by first heating to 120°C at least one commercially available copolyester, in particular of the Dynacoll^{R} 7000 series produced by Hüls AG, Troisdorf, Germany, as shown in Table I. The brominated bisphenol-A-diol as well as the dikresyl phosphate (as a phosphoric acid ester) as shown in Table I are added; subsequently, the mixture is evacuated at this temperature for 15 minutes, at a pressure of less than 1 Torr. Then diphenyl methane-4,4'-diisocyanate (e.g. Desmodur^{R} 44 MS produced by BAYER AG, Germany) as well as Desmodur^{R} DA (BAYER) as the trifunctional isocyanate compound are successively added. Finally, the reaction bath is evacuated for 30 minutes.

### Embodiment example 2:

The adhesive is produced as in Example 1, except that a polyurethane hot melt adhesive on the basis of Ipatherm S 14/187^{R}, also sold by H.B. Fuller GmbH, is used.

Table I contains copolyesters suitable for use in the embodiment example 1 which are used in the weight-parts stated in the Table in order to vary the flexibility and the processing features of the adhesive according to the invention in accordance with practical requirements.

### Embodiment example 3:

A heat-resistant laminate was prepared by a conventional lamination process, but with the conventional adhesive replaced by the adhesive of Embodiment example 2. The laminate comprised aluminium foil and glass-wool nonwoven bonded together by the heat-resistant adhesive. The laminate showed high flexibility and could advantageously be used for the production of heat-protective labour safety materials, which fully complied with the requirements of practical application under conditions of high heat exposure.

| Table I for Embodiment Example 1 | | | | | | | |
|---|---|---|---|---|---|---|---|
| | a | b | c | d | e | f | g |
| Dynacoll 7130 | 256 | 260 | 266 | | | 177 | |
| Dynacoll 7140 | - | | | 265 | 268 | | 272 |
| Dynacoll 7230 | 350 | 352 | 363 | 252 | | 353 | 370 |
| Dynacoll 7250 | | | | | 363 | 105 | |
| Disflamol DPK | 80 | 100 | 150 | 100 | 120 | 150 | 170 |
| Fire Guard FG-3000 | 120 | 100 | 50 | 100 | 80 | 50 | 30 |
| Desmodur 44 MS | 168 | 162 | 144 | 149 | 143 | 139 | 132 |
| Desmodur DA | 26 | 26 | 26 | 26 | 26 | 26 | 26 |
| a-c increasing flexibility b/d more rigid, cures faster d/e e less rigid than d f flexible but of low initial strength g flexible, good initial adhesion | | | | | | | |

## Claims

1. A moisture-reactive polyurethane (PUR) hot melt adhesive, containing at least one reaction product of at least one component containing NCO groups and at least one polyhydroxy component,
**characterized by**
a content of a flameproof or non-flammable component.

2. The PUR hot melt adhesive according to claim 1,
**characterized in**
that the flameproof component is a halogenated diol compound.

3. The FUR hot melt adhesive according to claim 1 or 2,
**characterized in**
that the hot melt adhesive is the reaction product of a prepolymer, formed from the polyhydroxy component and the NCO reactive component, and the halogenated diol compound.

4. The PUR hot melt adhesive according to claim 3,
**characterized in**
that the polyhydroxy component of the hot melt adhesive is segmented by the halogenated diol compound.

5. The PUR hot melt adhesive according to claim 1 and 2,
**characterized in**
that the hot melt adhesive comprises the reaction product of a prepolymer, formed from the halogenated diol compound and an isocyanate compound, and the polyhydroxy component, whereby the polyhydroxy component optionally is a second prepolymer.

6. The PUR hot melt adhesive according to any one of claims 3 to 5,
**characterized in**
that the halogenated diol compound is contained in the PUR hot melt adhesive in a block-like or statistical distribution.

7. The PUR hot melt adhesive according to any one of claims 1 to 6,
**characterized in**
that the polyhydroxy component comprises a polyester compound, a polyether compound, a polyester polyether compound or the like, or more than one of such compounds.

8. The PUR hot melt adhesive according to any one of claims 2 to 6,
**characterized in**
that the halogenated diol compound is a halogenated bisphenol-A-diol.

9. The PUR hot melt adhesive according to claim 8,
**characterized in**
that the halogenated diol compound is brominated bisphenol-A-diol, in particular of the Fire Guard^{R} FG 3600 type.

10. The PUR hot melt adhesive according to any one of claims 1 to 9,
**characterized in**
that the heat-resistant, moisture-reactive PUR hot melt adhesive contains a phosphoric acid ester as a further component.

11. The PUR hot melt adhesive according to claim 10,
**characterized in**
that the phosphoric acid ester comprises a bi- or trifunctional compound, preferably diphenyl kresyl phosphate.

12. The PUR hot melt adhesive according to any one of claims 1 to 11,
**characterized in**
that the hot melt adhesive contains at least one multi-functional isocyanate compound as a further component.

13. The PUR hot melt adhesive according to claim 12,
**characterized in**
that the isocyanate compound is added to the PUR hot melt adhesive only after functionalizing the hydroxy groups of the polyhydroxy component with a bifunctional NCO component.

14. The PUR hot melt adhesive according to claim 12 or 13,
**characterized in**
that the multifunctional isocyanate compound is a trifunctional isocyanate.

15. The PUR hot melt adhesive according to any one of claims 1 to 14,
**characterized in**
that the PUR hot melt adhesive contains (in wt.-% based on the total weight):
a) 65 to 90 wt.-% of moisture-reactive PUR hot melt adhesive containing 5 to 15 wt.-% of brominated bisphenol-A-diol,
b) 5 to 15 wt.-% of phosphoric acid ester,
c) 0 to 5 wt.-% of trifunctional isocyanate.

16. A heat protection laminate, consisting of at least two material layers and an adhesive mixture bonding these layers together,
**characterized in**
that the adhesive mixture comprises a holt melt adhesive which contains a flameproof or non-flammable component.

17. The heat protection laminate according to claim 16,
**characterized in**
that the hot melt adhesive is a moisture-reactive polyurethane (PUR) hot melt adhesive and contains a halogenated diol compound as the flameproof component.

18. The heat protection laminate according to claim 17,
**characterized in**
that the PUR hot melt adhesive contains a polyester compound, a polyether compound, a polyester polyether compound or the like, or several such compounds as its polyhydroxy component.

19. The heat protection laminate according to claim 16 or 17,
**characterized in**
that the halogenated diol compound segments the polyhydroxy component of the PUR hot melt adhesive.

20. The heat protection laminate according to claim 16 or 17,
**characterized in**
that the hot melt adhesive is the reaction product of a prepolymer formed from the polyhydroxy component and the NCO reactive component, and the halogenated diol compound.

21. The heat protection laminate according to claim 16 or 17,
**characterized in**
that the hot melt adhesive is the reaction product of a prepolymer formed from the halogenated diol compound and an isocyanate compound, and the polyhydroxy component.

22. The heat protection laminate according to any one of claims 17 to 21,
**characterized in**
that the halogenated diol compound is a brominated bisphenol-A-diol.

23. The heat protection laminate according to claim 22,
**characterized in**
that the halogenated diol compound is a brominated bisphenol-A-diol, in particular of the Fire Guard^{R} FG 3600 type.

24. The heat protection laminate according to any one of claims 16 to 23,
**characterized in**
that the adhesive mixture contains a phosphoric acid ester as a further component.

25. The heat protection laminate according to claim 24,
**characterized in**
that the phosphoric acid ester comprises a bi- or trifunctional compound, preferably diphenyl kresyl phosphate.

26. The heat protection laminate according to any one of claims 16 to 25,
**characterized in**
that the adhesive mixture contains at least one multi-functional isocyanate compound as a further component.

27. The heat protection laminate according to claim 26,
**characterized in**
that the isocyanate compound is only added to the adhesive mixture after functionalization of the hydroxy groups of the polyhydroxy component of the PUR hot melt adhesive with a bifunctional NCO component.

28. The heat protection laminate according to claim 26 or 27,
**characterized in**
that the multifunctional isocyanate compound is a trifunctional isocyanate.

29. The heat protection laminate according to any one of claims 16 to 28,
**characterized in**
that the adhesive mixture contains (in wt.-% based on the total weight):
a) 65 to 90 wt.-% of heat-resistant, moisture-reactive PUR hot melt adhesive containing 5 to 15 wt.-% of brominated bisphenol-A-diol
b) 5 to 15 wt.-% of phosphoric acid ester
c) 0 to 5 wt.-% of trifunctional isocyanate.

30. The heat protection laminate according to claims 16 to 29,
**characterized in**
that the heat protection laminate cures under the influence of moisture.

31. Use of a heat protection laminate according to one of claims 16 through 30 for producing labour safety materials which are highly heat resistant and flexible.
